# EUROPEAN PATENT APPLICATION

(11) **EP 4 718 388 A1**
(43) Date of publication of application: **01.04.2026**
(21) Application number: 25202838.6
(22) Date of filing: 17.09.2025
(51) Int. Cl.: G06V 10/778, G06V 20/40, G06V 20/52

(54) **SURVEILLANCE SYSTEMS AND METHODS**

(30) Priority: 25.09.2024 GB 202414069
(71) Applicant: Milestone Systems A/S, 2605 Brøndby (DK)
(72) Inventor: NAVARRO, Fulgencio, 2605 Brøndby (DK); NORTON, Barry, 2605 Brøndby (DK)
(74) Representative: Canon Europe Limited

(57) **Abstract**

A computer-implemented method 40 for augmenting a surveillance system configured to receive a data stream from a detection device, analyse the data stream, generate content metadata about the content of the data stream based on the analysis of the data stream, and determine an event for display to a surveillance system operator based on the content metadata, the method comprising the steps of:
receiving a surveillance system operator input 42 comprising a natural language text input;
accessing contextual knowledge 43 of the surveillance system from a contextual knowledge source;
determining an input 44 to a machine learning model based on the received surveillance system operator input and the contextual knowledge of the surveillance system from the contextual knowledge source;
generating one or more rules 46 by the machine learning model based on the determined input; and
applying the one or more generated rules 48 for modifying the event displayed to the operator.

## Description

### FIELD

The present disclosure relates to a method for augmenting a surveillance system, a video management system (VMS) and a surveillance system.

### BACKGROUND

A surveillance system will typically comprise a number of different devices, such as video cameras, and computer hardware connected together via a network and controlled by advanced management software, typically referred to as a video management system (VMS) also referred to as video management software or video management server. The VMS is a component or sub-system of the surveillance system and provides a way to process, search, record and view video streams received from video cameras, or other data streams from detection devices. Services, software modules, servers or similar may be provided in the VMS to perform one or more of the following: receiving one or more data streams from one or more detection devices, storing the received one or more data streams and providing an interface to view the received data streams, such as a video stream from a camera.

One or more analytic services, software modules, servers or similar are provided to perform analyses on the data received from various detection devices to, for example, detect an object, classify an object, track an object etc. The analytics may be performed by one or more models, such as a machine learning model, trained to perform a particular task. In some cases, models will be generally trained and then adapted to the specific task by using various techniques, for example using domain adaption techniques, such as fine-tuning, reinforced learning, and rule-based, in which the models are trained, typically in a supervised or semi-supervised manner, to learn specific characteristics of the scenario in which they will operate. Typically, these may be referred to as human-in-the-loop schema, or operator feedback as is common in the surveillance field. These have been found to add complexity, increase computational cost, and increase the legal compliance burden.

Fine-tuning techniques will typically involve utilizing some form of Machine learning operation (MLOps) pipeline, where solution adaptation/retraining occurs either in a different location from where the model is intended to operate or within the same installation. In the former case, data movement introduces risks and often encounters legal constraints. In the latter case, there can be significant costs in running the process within the installation and may require either over-dimensioned resources or the suspension of some services to facilitate fine-tuning. Although fine-tuning adjusts the expected performance of models, it is not adept at capturing specific situations.

Reinforcement learning techniques can be useful in certain domains but can be difficult to use in other domains, especially those with disparate scenarios and varied sources. For example, in surveillance, it is difficult to define reward techniques to optimize system outcomes across numerous detection devices, such as video cameras, and the disparate scenarios pose challenges. Consequently, feedback must be relatively generic, resulting in limited contextual adaptation. Furthermore, reinforcement learning increases the resource requirements of the system.

A further option is to use rules-based solutions on the output of the models. An operator will define one or more rules to better determine the result of analysis. However, these solutions are time-consuming because operators need to define the rules and are restricted by the predetermined rules integrated into the system. Additionally, the defined rules will need to be regularly reviewed and updated.

It is an object of the present invention to obviate some of the above-mentioned problems.

### SUMMARY

A first aspect of the disclosure is provided by a method as set out in claim 1. A further aspect of the disclosure is provided by a computer program as set out in claim 13. An additional aspects of the disclosure are provided by a video management system as set out in claim 14 and a surveillance system as set out in claim 15. Preferable features of the first aspect are set out in the dependent claims. Preferable features of the other aspects are set out or derivable from the dependent claims.

The contextual knowledge of the surveillance system may include information associated with the content metadata.

The information associated with the content metadata may include information associated with a data field of the content metadata.

The information associated with the content metadata may include information associated with the structure of the content metadata.

The contextual knowledge of the surveillance system may include information associated with the architecture of the surveillance system.

The contextual knowledge of the surveillance system may include information associated with an analytics engine for analysing the content of the data stream and for generating content metadata about the content of the data stream.

The contextual knowledge of the surveillance system may include information associated with one or more types of analytics performed by the analytics engine, wherein each type of analytics performed generates content metadata of a type.

The contextual knowledge of the surveillance system may include information associated with an event engine for determining an event for display to the operator based on the content metadata.

The contextual knowledge of the surveillance system may include information associated with a detection device for transmitting the data stream.

The step of determining an input may comprise determining one or more prompts based on the received surveillance system operator input and the contextual knowledge of the surveillance system.

The one or more prompts may be determined by a prompt generator model.

The step of accessing the contextual knowledge may be performed by a retriever model.

Preferably a retriever model and prompt generator model may be combined as a generator and retriever model.

The retriever model may receive the surveillance system operator input as an input, access the contextual knowledge of the surveillance system and determine relevant contextual knowledge to use in determining the input to the machine learning model based on the surveillance system operator input.

The machine learning model may comprise a Large Language Model trained to generate rules.

The one or more rules may be defined by one or more computer readable instructions. That is to say that the one or more computer readable instructions may comprise the rules.

The step of determining the input to the machine learning model may be further based on contextual information associated with the surveillance system operator input.

The surveillance system operator input may be operator feedback based on a previous event generated by the event engine.

The contextual information associated with the surveillance system operator input may comprise information associated with the previous event.

Preferably, information associated with the previous event provides contextual information associated with the surveillance system operator input, wherein the step determining the input to the machine learning model may be further based on contextual information associated with the surveillance system operator input.

Preferably there is a further step comprising accessing contextual knowledge associated with the previous event, and wherein the step of determining the input to the machine learning model is further based on the contextual knowledge associated with the scene comprising the previous event.

The contextual knowledge of the surveillance system may comprise contextual knowledge associated with at least one of location of a detection device, surveillance environment and scene of surveillance.

One or more filters may be applied to modify the event displayed to the operator. The one or more filters may be based on the one or more generated rules.

The one or more rules may modify at least one of an event engine and an existing filter.

The present disclosure augments a surveillance system by providing events which are based a natural language input by the operator and contextual information. It is possible to reduce the complexity, reduce computational costs in adapting a system using a machine learning model to a particular environment, installation and surveillance area, especially because it reduces or removes the need for fine-tuning, reinforced learning and rule-based approaches. Additionally, the legal compliance burden is reduced when compared to existing methods. The present disclosure also allows for the system to be adapted on an individual level to a specific operator particularly, but not exclusively, in the case of providing the natural language input as feedback to a previous event.

The term rule encompasses computer program code, i.e. computer-readable instructions, as such the one or more rules generated by the disclosure may encompass one or more instructions. The term may encompass other types of rules.

### BRIEF DESCRIPTION OF DRAWINGS

For a better understanding of the present invention, and to show more clearly how it may be carried into effect, reference will now be made by way of example only to the accompanying drawings. Other features and advantages of the present invention will become apparent from the following description of non-limiting embodiments, with reference to the appended drawings, in which:
**Figure 1** schematically illustrates an embodiment of a video surveillance system comprising a video management system;
**Figure 2** schematically illustrates an embodiment of a computer implemented method; and
**Figure 3** schematically illustrate a process flow of an embodiment of the computer implemented method.

### DETAILED DESCRIPTION OF DRAWINGS

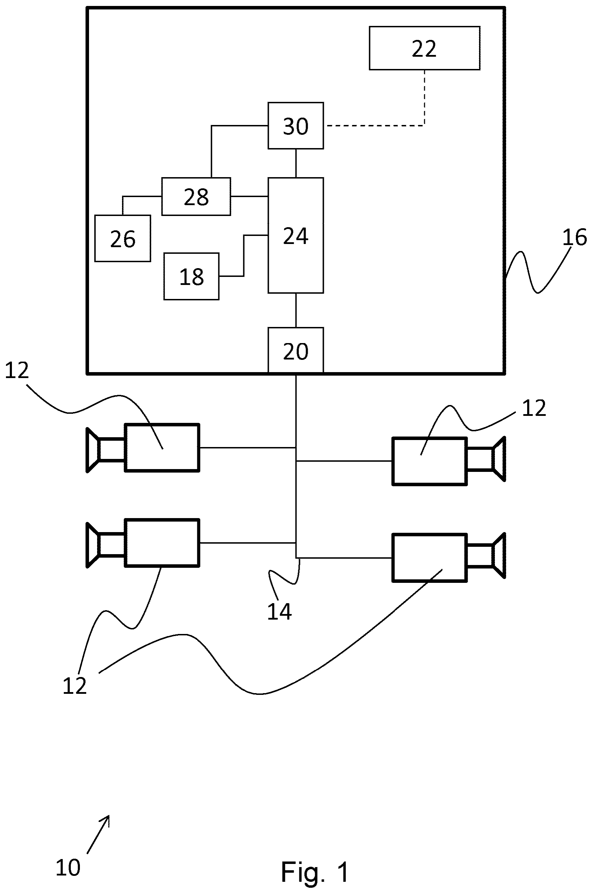

Referring firstly to Figure 1, a surveillance system comprising a surveillance management system according to an embodiment is generally indicated at 10. Typically, the surveillance management system is known as a Video Management System, VMS, and the term VMS will be used throughout. The terms Video Management Software or Video Management Server are also used interchangeably with Video Management System. Although the below embodiments reference video, the embodiments are not limited to this. The VMS and/or surveillance system may receive data from other detection devices, either solely or in combination with video data from video cameras.

A plurality of detection devices are provided. In the current embodiment, the plurality of detection devices are video cameras 12. In other embodiments, a single detection device, such as a video camera, microphone or similar, may be provided. The plurality of detection devices may comprise a mix of devices which produce data, for example a microphone producing audio data, proximity sensors producing proximity data, video cameras producing video data, etc.

The plurality of video cameras 12 may be provided by a mix of camera types or a single type. Camera types may include stationary cameras (i.e. geographically fixed) which are mounted to a stationary object such as a building or structure and/or movable cameras (geographically dynamic) which are mounted to a movable object such as a person or car. The stationary cameras or movable cameras may have a fixed Field Of View (FOV) or may have a movable FOV, for example, a PTZ camera with pan function, zoom function, and tilt function.

Each detection device is communicatively connected, either through a wired and/or wireless network 14, to the video management system 16. For example, the video cameras 12, especially stationary type cameras, may be connected through an Ethernet connection. In examples using wireless communication means, especially for movable cameras or movable detection devices, a wireless network such as Wi-Fi, 4G or 5G may be used. In most embodiments, the video cameras 12 are connected permanently, but in some embodiments, they may be communicatively connected in an ad-hoc manner.

The detection devices will typically be distributed across of predetermined area or space where surveillance is desired, i.e. a surveillance area. For example, video cameras may be disposed within a building on different floors and outside of the building. The number of detection devices, the type of detection device and the positions of the detection devices are determined by various factors. For example, a level of surveillance desired, the size of surveillance area and the layout of the surveillance area.

A data stream is provided by each detection device. In the current embodiment, a video data stream is produced by each video camera 12 during use. The video data stream may comprise a sequence of video frames in a chronological order.

A metadata stream, in some cases, may also be associated with each detection device. In the current embodiment, a metadata stream may be associated with each video camera. The metadata stream may comprise useful data such as timestamp data and, in cases with analytics module included in the detection device, such as a video camera with on-board analytics, analytics data, i.e. content metadata, such as, object detection data, object tracking, object recognition or similar content data based on the content of the data stream.

The video management system 16 is configured to receive the data stream from each detection device. In the current embodiment, the VMS receives video data from each video camera 12. Each data stream will be stored in a media repository 18. The media repository 18 may comprise a media database or other suitable storage device, such as hard disks or the like, for storing media content, especially the video data stream.

The video management system 16 comprises an interface or interfaces for receiving the data streams from the detection devices. Said received data streams are stored in the media repository 18.

An interface 30 is also provided by the VMS to allow accessing of the received live data stream and/or stored/retrieved data streams. The interface 30 may be implemented through various types of interfaces. For example, an application interface, such as a software development kit and/or one or more communication protocols, e.g. SOAP, XML, etc. Accordingly, the interface 30 may operate as a gateway to different types of system.

Camera drivers 20 are provided to allow the VMS 16 to interface with the video cameras 12. The video cameras 12 may require the same or different drivers. The video cameras 12 may provide their respective video data stream in the same or different formats, i.e. using the same or different encoding schemes and/or different network protocols. Different video cameras 12 may provide different interfaces for camera control, such as zoom or pan. Accordingly, a plurality of different camera drivers may be provided. The camera driver 20 being configured to cooperate with respective camera types. In particular, each camera driver may implement one or more suitable network protocols or other communication standards for transmitting data between video cameras 12 and/or other peripheral devices and data processing systems. Examples of such protocols and standards include, but are not limited to, Open Network Interface Forum (ONVIF) standard and the Real Time Streaming Protocol (RTSP). For other detection devices other drivers may be needed.

The data stream(s) may be processed by the VMS or a dedicated server within the VMS 16. The data stream(s) may be processed by analysing the content of the data stream(s). For example, one or more video analytics processes may be performed where the content of the video data is analysed to detect objects, classify objects, determine object properties, detect motion, track objects, or other known analytics.

The processing can be performed on the live data stream received, the data stream retrieved from the media repository, or a data stream buffered in a memory within the VMS 16. The analytics may be performed by the VMS 16 in addition to any analytics performed on-board the video cameras or detection devices. In the case where the video cameras or detection devices do not comprise on-board analytics, the processing may only be performed by VMS 16 or a dedicated server.

One or more content analysis software tools may be provided to perform the processes. For example, as discussed above, the analysis of the content of the data streams results in content metadata. The content metadata is associated to the respective data stream. The analysis software, or any other video analytics software that generates content metadata, may be run on an analytics server (which may be part of the VMS or in the cloud) or may run on the detection device itself.

In the current embodiment, object detection or recognition may be performed on the video data from the video streams by one or more video analytics software tools such as object detection software. The video analytics software generates content metadata which is associated to the respective video stream and defines where in a frame an object has been detected, and which may also define what type of object has been detected e.g., person, car, dog, bicycle, and properties of the object, such as colour.

A user interface (UI client) 22 may be provided. The UI client 22 may be configured to provide a graphical user interface (GUI) including a user interface window which enables a user of the VMS 16 to view live video stream and stored video stream. The UI client 22 may display the GUI on a suitable display device such as a monitor or similar type of screen connected to the VMS 16.

The GUI may also be configured to enable control operations, such as operations to control the or each video camera and control video playback. Content and structure of data items may be displayed through the user interface and may be configurable by the user via control buttons etc.

An operator input field may be provided in the GUI, preferably the user interface window. The operator input field allows for textual input from the user.

The VMS 16 may be embodied as one or more software program(s) comprising respective computer executable instructions configured for execution on a suitable data processing system, e.g. by one or more server computers. The data processing system implementing the VMS is either arranged remote from or within the same site as the one or more video cameras.

A recording server 24 may be provided. The recording server 24 may be embodied through a software program module executed by a suitable data processing system, e.g. by one or more server computers. The recording server receives the inputted data streams from respective detection devices via the corresponding driver, such as the inputted video streams from the respective video cameras 12 via the corresponding camera drivers 20 in the current embodiment. Data streams received by the VMS 16 are stored, also referred to as recorded, in a suitable storage media. In the current embodiment, the media repository 18 is a component of the VMS. In other embodiments, the media repository 18 may be a separate entity but communicatively connected to the VMS.

If there is a separate metadata stream supplied by one or more of the cameras, the recording server may receive and store the additional data in association with the respective video streams.

An additional repository 26 for the metadata and content metadata may be provided. In some embodiments, the metadata repository may be integrated into the media repository.

An events engine 28 is provided. A software program module executed by a suitable data processing system, e.g. by one or more server computers, may implement the events engine 28. Content metadata and/or the metadata streams provided by detection devices are received by the events engine 28. The events engine 28 stores the received metadata into the metadata repository 26. The events engine 28 may serve as an indexing server by indexing the stored metadata to allow subsequent search and retrieval.

The stored video data, or other data such as audio data, and metadata are accessible through the interface 30 and events engine 28, for example by searching by the operator. In the example of searching, the UI client 22 may query the events engine 28 through interface 30. Results matching the search query are returned, for example a search for a 'green vehicle' would return results of content metadata which indicates a 'vehicle' with a 'green' colour. In some embodiments, a separate indexing server may be provided, and the events engine interacts with the indexing server to allow for stored video, or other data such as audio data, and metadata to be searched and retrieved.

The UI client 22 is configured to respond to receipt of the matching results by displaying said results as events which allows the operator to view the particular event.

The events engine 28 may also monitor the data streams and metadata, either the received metadata or the generated content metadata, for predetermined events. The operator may set an event by defining one or more rules determining or defining the predetermine event, for example, the operator may set a filter for a 'green vehicle' which will filter the content metadata for objects classified as a vehicle having the colour green as a property. Events generated by the predetermined events may be stored in an events repository for later retrieval by the operator or it may be displayed to the user when the event is determined, for example by displaying an alert.

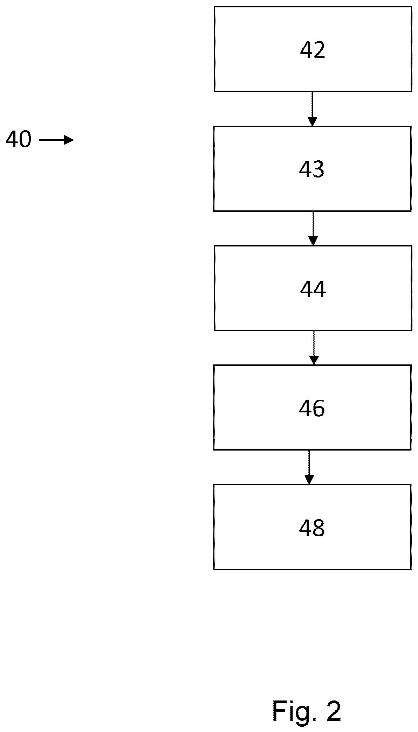

Referring to Figure 2, a method of augmenting a surveillance system is generally indicated at 40. In the current embodiment, the method will be described with reference to the surveillance system shown and discussed with reference to Figure 1. However, in other embodiments, the surveillance system may be configured to receive a data stream from a detection device, analyse the data stream, generate content metadata about the content of the data stream based on the analysis of the data stream, and determine an event for display to a surveillance system operator based on the content metadata.

A surveillance system operator input 42 is received. In the current embodiment, the operator input comprises a natural language text input, for example 'show me green vehicles', preferably by inputting the text through the GUI using the operator input field.

A contextual knowledge source is accessed in step 43. In the current embodiment, the contextual knowledge source comprises contextual knowledge of the surveillance system. The contextual knowledge of the surveillance system comprises contextual information, e.g. information associated with the content metadata, preferably the structure of the content metadata, and more preferably the structure of the data fields of the content metadata. For example, the format of structure of the data field, for example the contextual knowledge will comprise the information that the data fields follow event then class then time, i.e. event-class-time. The contextual information is received from the contextual knowledge source.

In other embodiments, the contextual knowledge source may comprise further contextual information on the surveillance system, for example, at least one of information associated with the data field of the content metadata, information associated with the structure of the content metadata, information associated with the architecture of the surveillance system, information associated with one or more analytics engines for analysing the content of the data stream and information associated with the events engine.

The contextual information may comprise information associated with the location of the detection device(s), information associated with the surveillance area. Put another way, the contextual information may comprise information associated with physical (real-world) entities of the surveillance system, for example information associated with the location of physical entities of the surveillance system, The location may be based on location data obtained from a global position system, such as GPS, or GIS data from a GIS data source.

The contextual knowledge source may also comprise contextual knowledge of the scene under surveillance. For example, the type of area under surveillance. The scene may be determined by location data and/or content metadata from the data streams.

The contextual knowledge source and the contextual information within may be accessed based on the surveillance system operator input and/or other information, such as an event previously viewed by the operator. Preferably the event previously viewed by the operator will be associated with, i.e. linked, to the surveillance system operator input. Put another way, the surveillance system operator input will be provided as feedback to an event the operator has reviewed.

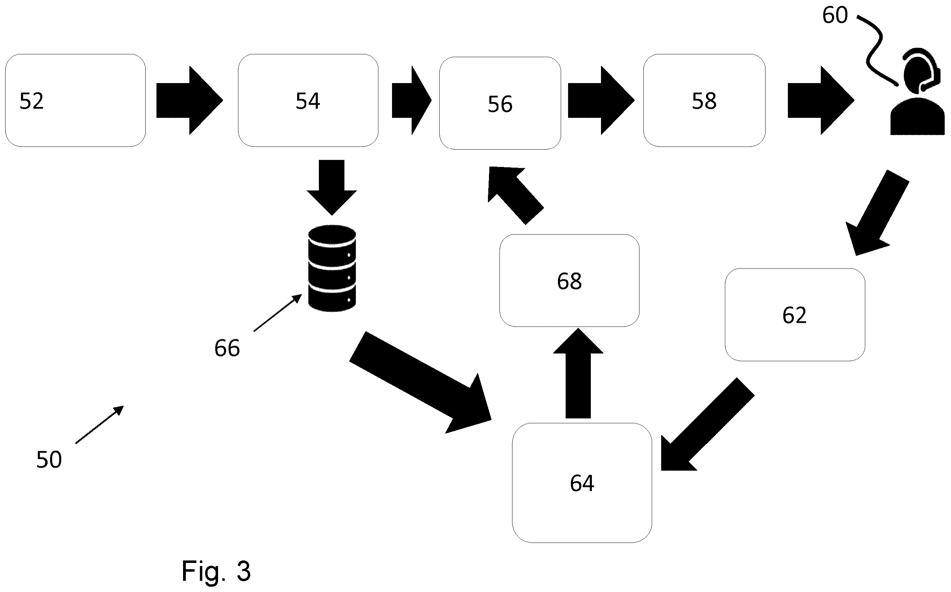

In some embodiments, such as that shown in Figure 3, a retriever model is provided to retrieve contextual information from the contextual knowledge source.

In step 44 an input for a machine learning model is determined. The contextual knowledge accessed 43 and the natural language text input of the operator input 42 are used to determine an input to be used with a machine learning model.

In some embodiments, such as that shown in Figure 3, a prompt generator model is used in step 44 to determine the input.

In step 46, a machine learning model, preferably a Large Language model trained to generate rules, receives the input determined in step 44. One or more rules are generated by the machine learning model based on the determined input.

The one or more rules are applied in step 48. In the current embodiment, the one or more rules are applied using the events engine, for example, by setting up a filter which will monitor for a 'green vehicle' and generate an event for display when a vehicle which is green is found in the data stream. In other embodiments, the applied rules may modify the events engine to modify the events generated.

The one or more rules generated in 46 may be one or more computer-readable instructions. A computer program may be defined by the one or more rules (instructions). The instructions may be applied to modify the events or define what events are determined. In some embodiments, the rules may modified parameters are variables in existing rules.

Referring now to Figure 3, a process flow is generally indicated at 50. The process flow of a method of augmenting a surveillance system is generally indicated at 50.

One or more data streams 52 are received by the VMS from detection devices within a surveillance area. For example, one or more video data streams are received by the VMS 16 from video cameras 12, as discussed above in reference to Figure 1.

One or more analytic processes 54 are performed on the one or more data streams to generate content metadata. For example, the VMS or a dedicated server within the VMS processes the content of the video data stream, the analysis performed on the video data streams may detect objects, classify objects, determine object properties etc.

One or more events are determined 56 based on at least the content metadata generated from the analytics processes 54. For example, the events engine 28 may comprise a filter used to determine an event based on one or more rules, such as one or more rules to generate an event when a 'vehicle' which is 'green' is detected, or when a user has performed a search for a 'vehicle' which is 'green', as discussed above.

The events determined 56 are displayed 58 to an operator 60. For example, the UI client will display an event notification. The event notification may either be multiple event notifications, with each representing a determined event, or be a single notification which links to all the relevant events. When a single events notification is provided, for example for multiple determined events, it may be provided in the form of a events report. In some embodiments, the events engine will generate an events report which will be notified to the operator, for example through the GUI. In some cases, the events report may be notified to the operator through an email or similar means, the operator will either be able to access the events through the report and a VMS remote client or for later access through the VMS.

The operator 60 will review the event notification for all the events determined in 56. When reviewing the events the operator is provided with the data from the detection devices associated with the relevant content metadata, for example, the video data which has the associated content metadata for 'vehicle' and 'green'.

The operator may not be content with the events being notified, for example because there are numerous events which may be irrelevant, and therefore wish for the events to be modified, perhaps to reduce irrelevant results. Using the 'green' 'vehicle' example, the operator may be looking for green family vehicles, such as a green hatchback vehicle, but there are a number of other types of vehicles which may be green, for example, refuse trucks.

In the current embodiment, the operator will provide feedback 62 based on the notified events. The surveillance system operator will provide this feedback in the form of a textual input in a natural language format, as discussed above. The operator, in the current example, may provide the following feedback 'avoid generating an event if it is cause by a green truck at [x]/[this] time'. Note that [x] is used to indicate a time which may be set by the user, for example by stating 9:00 in the textual input, and [this] is used to indicate a case where the time may be determined by context information from the event associated with the feedback, such as timestamp data from the metadata associated with the video data.

In the current embodiment, a combined retriever model for accessing contextual knowledge and prompt generator model for generating an input 64 is provided, but in other embodiments other means or models may be provided which are able to individually or in combination access contextual knowledge and generate an input, preferably the means is configured to implement Retrieval Augmented Generation (RAG) Architecture.

The retriever model uses the operator input 62 to determine the contextual knowledge source to access and retrieves the relevant contextual information. In the current example, the retriever model accesses a contextual knowledge source 66 which comprises contextual information on the structure of the events, preferably the data fields, and retrieves context information associated with the content metadata fields which also defines the format of analytics outcomes, event-class-time. In some embodiments, the retriever model will access other contextual knowledge, for example, contextual knowledge from the event, such as a time stamp from metadata associated with the event, and/or the content metadata associated with the event. The retriever model, as discussed above, may retrieve other contextual information as appropriate such as scene information, location information etc.

Once the contextual knowledge has been accessed the prompt generator model uses the operator input 62 and the retrieved contextual knowledge to generate one or more prompts. Using the current example, the combined retriever and prompt generator model will generate a prompt such as 'Generate one or more rules that receives an event in the format event-class-time, and filters them based on the following: avoid generating an event if it is cause by a green truck at [x]/[this] time'. Note the 'x' and 'this' are only used as a placeholder example as discussed above, in the actual prompt it may state the time, either from the operator input or the contextual information about the timestamp associated with the event. The surveillance system operator feedback is essentially wrapped in an appropriate prompt which has been derived from the contextual knowledge.

A machine learning model, preferably a Large Language Model, trained to generate rules receives the one or more prompts generated by the prompt generator. The machine learning model generates one or more rules based on the received prompt 68.

The one or more rules generated by the machine learning model are applied to modify the event display to the operator and/or the events determined by the events engine. The rules may be applied as a filter or may be applied to modify an existing filter. The one or more rules may also modify the events engine. The operator 60 is presented with events which have been refined based on their own feedback. In the current example, the refined results will only present events which do not include green trucks at a particular time.

The use of the operator feedback and contextual information allows for the events to be improved for the particular environment in which the surveillance system operates. That is to say the surveillance system operating in the particular environment is augmented by use of contextual information and operator feedback without the need for developing the surveillance system for the specific area using complex and expensive processes, for example, there is no need to fine tune models for specific tasks etc.

A further example of the process will now be described.

A plurality of video cameras 12 will be provided in a surveillance area within an office. Each video camera is located in a hallway and monitors said hallway.

The VMS 16 receives a video data stream from each of the video cameras, stores the video streams, analyses the video streams for content metadata etc. The video streams are analysed by a people tracker module which identifies individuals and tracks their movements, typically content metadata will include a person ID, start position, end position, start time and end time.

In the current example, an operator 60 wishes to set an event, for example because an event has not been previously set, and provides a natural language input 62, as discussed above. In the current example, the surveillance system operator input is provided with the following natural language input 'I wish to know how many people come from the west of the hallway and move to the south between 10 and 12 in the morning'.

The retriever model accesses one or more contextual knowledge sources 66 to retrieve the relevant contextual information. In the current example, the contextual information on the structure of the events and retrieves context information associated with the content metadata fields which also defines the format of analytics outcomes, peoplelD - origin position - end position - start time - end time. The contextual information will also comprise location and position information to determine west and south.

Once the contextual knowledge has been accessed the prompt generator model uses the operator input 62 and the retrieved contextual knowledge to generate one or more prompts. Using the current example, the combined retriever and prompt generator model will generate a prompt such as 'Generate a piece of code or query for the events engine with the format peoplelD-origin position-end position-start time-end time, and filter based on the following: I wish to know how many people come from the west of the hallway and move to the south between 10 and 12 in the morning'

A machine learning model, preferably a Large Language Model, trained to generate rules receives the one or more prompts generated by the prompt generator. The machine learning model generates one or more rules based on the received prompt 68.

The one or more rules generated by the machine learning model are applied to the events engine. The events engine will then determine events defined by the one or more rules generated by the machine learning model. The determined events will then be presented to the operator through the GUI or be generated in the form of a report for the operator's review.

The operator is able to simply and quickly define what they wish to be displayed or reported to them through providing an input in the form of natural language without needing to fine tune models for specific tasks or create their own code because the system is able to determine and apply one or more rules which will define what the operator wishes to see based on operator input and contextual knowledge.

While the disclosure has been illustrated and described in detail in the drawings and foregoing description, such illustration and description are to be considered illustrative or exemplary and not restrictive, the disclosure being not restricted to the disclosed embodiment(s). Other variations on the disclosed embodiment can be understood and performed by those skilled in the art, in carrying out the claimed disclosure, from a study of the drawings, the disclosure and the appended claims. Such variations may derive, in particular, from combining embodiments as set forth in the summary of the disclosure and/or in the appended claims.

All of the features disclosed in this specification, and/or all of the steps of any method or process so disclosed, may be combined in any combination, except combinations where at least some of such features and/or steps are mutually exclusive. Each feature disclosed in this specification may be replaced by alternative features serving the same, equivalent or similar purpose, unless expressly stated otherwise. Thus, unless expressly stated otherwise, each feature disclosed is one example only of a generic series of equivalent or similar features.

In the claims, the word "comprising" does not exclude other elements or steps, and the indefinite article "a" or "an" does not exclude a plurality. A single processing unit or multiple processing units or other unit may fulfil the functions of several items recited in the claims. The mere fact that different features are recited in mutually different dependent claims does not indicate that a combination of these features cannot be advantageously used. Any reference signs in the claims should not be construed as limiting the scope of the disclosure.

In the preceding embodiments, the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio, and microwave may be included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Embodiments of the method steps described herein as being carried out by a processing unit can be implemented by means of hardware comprising several distinct elements, and/or at least in part by means of a suitably programmed microprocessor or microprocessors. In the apparatus claims or system claims enumerating several means, several of these means can be embodied by one and the same element, component or item of hardware. The mere fact that certain measures are recited in mutually different dependent claims or described in different embodiments does not indicate that a combination of these measures cannot be used to advantage.

As used herein, and unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

## Claims

1. A computer-implemented method for augmenting a surveillance system configured to receive a data stream from a detection device, analyse the data stream, generate content metadata about the content of the data stream based on the analysis of the data stream, and determine an event for display to a surveillance system operator based on the content metadata, the method comprising the steps of:
receiving a surveillance system operator input (42) comprising a natural language text input;
accessing contextual knowledge (43) of the surveillance system from a contextual knowledge source;
determining an input to a machine learning model (44) based on the received surveillance system operator input and the contextual knowledge of the surveillance system from the contextual knowledge source;
generating one or more rules by the machine learning model (46) based on the determined input; and
applying the one or more generated rules (48) for modifying the event displayed to the operator.

2. A computer-implemented method as claimed in claim 1, wherein the contextual knowledge of the surveillance system includes at least one of:
information associated with the content metadata;
information associated with the architecture of the surveillance system;
information associated with an analytics engine for analysing the content of the data stream and for generating content metadata about the content of the data stream;
information associated with an event engine for determining an event for display to the operator based on the content metadata; and
information associated with a detection device for transmitting the data stream.

3. A computer-implemented method as claimed in claim 2, wherein the information associated with the content metadata includes at least one of information associated with a data field of the content metadata and information associated with the structure of the content metadata.

4. A computer-implemented method as claimed in claim 2 or claim 3, wherein the contextual knowledge of the surveillance system includes information associated with one or more types of analytics performed by the analytics engine, wherein each type of analytics performed generates content metadata of a type.

5. A computer-implemented method as claimed in any preceding claim, wherein the step of determining an input comprises determining one or more prompts based on the received surveillance system operator input and the contextual knowledge of the surveillance system, wherein the one or more prompts are determined by a prompt generator model.

6. A computer-implemented method as claimed in any preceding claim, wherein the step of accessing the contextual knowledge is performed by a retriever model, wherein the retriever model receives the surveillance system operator input as an input, accesses the contextual knowledge of the surveillance system and determines relevant contextual knowledge to use in determining the input to the machine learning model based on the surveillance system operator input.

7. A computer-implemented method as claimed in any preceding claim, wherein the one or more rules are defined by one or more computer readable instructions.

8. A computer-implemented method as claimed in any preceding claim, wherein the step of determining the input to the machine learning model is further based on contextual information associated with the surveillance system operator input.

9. A computer-implemented method as claimed in any preceding claims, wherein the surveillance system operator input is operator feedback based on a previous event generated by the event engine.

10. A computer-implemented method as claimed in claim 9, when dependent upon claim 8, wherein the contextual information associated with the surveillance system operator input comprises information associated with the previous event.

11. A computer-implemented method as claimed in claim 9 or claim 10, further comprising accessing contextual knowledge associated with the previous event, and wherein the step of determining the input to the machine learning model is further based on the contextual knowledge associated with the scene comprising the previous event.

12. A computer-implemented method as claimed in any preceding claim, wherein one or more filters are applied to modify the event displayed to the operator, the one or more filters being based on the one or more generated rules, and/or the one or more rules modify at least one of an event engine and an existing filter.

13. A computer program comprising one or more computer-readable instructions which, when run on one or more processing units, is configured to perform a computer-implemented method according to any preceding claim.

14. A video management system (16) for a surveillance system, the video management system comprising:
one or more processing units configured to receive a data stream from a detection device, analyse the data stream, generate content metadata about the content of the data stream based on the analysis of the data stream, and determine an event for display to a surveillance system operator based on the content metadata, wherein the one or more processing units are further configured to:
receive a surveillance system operator input (42) comprising a natural language text input;
access contextual knowledge (43) of the surveillance system from a contextual knowledge source;
determine an input to a machine learning model (44) based on the received surveillance system operator input and the contextual knowledge of the surveillance system from the contextual knowledge source;
generate one or more rules by the machine learning model (46) based on the determined input; and
apply the one or more generated rules (48) to modify the event displayed to the operator from the event engine.

15. A surveillance system comprising a detection device (12) for transmitting a data stream, an analytics engine (16, 54) for analysing the content of the data stream and for generating content metadata about the content of the data stream based on the analysis of the data stream, an event engine (28) for determining an event for display to a surveillance system operator based on the content metadata, and one or more processing devices, the one or more processing devices being configured to:
receive a surveillance system operator input (42) comprising natural language text data;
access contextual knowledge (43) of the surveillance system from a contextual knowledge source;
determine an input to a machine learning model (44) based on the received surveillance system operator input and the contextual knowledge of the surveillance system from the contextual knowledge source;
generate one or more rules by the machine learning model (46) based on the determined input; and
apply the one or more generated rules (48) to modify the event displayed to the operator from the event engine.
